# EUROPÄISCHE PATENTSCHRIFT

(11) **EP 0 954 958 B1**
(45) Veröffentlichungstag und Bekanntmachung des Hinweises auf die Patenterteilung: **11.12.2002**
(21) Anmeldenummer: 99108974.9
(22) Anmeldetag: 06.05.1999
(51) Int. Cl.: A01F 15/07

(54) **Rundballenpresse**
Roundbale press
Presse à balles rondes

(30) Priorität: 08.05.1998 DE 29808383 U
(43) Veröffentlichungstag der Anmeldung: 10.11.1999
(73) Patentinhaber: Kverneland Gottmadingen GmbH & Co. KG, 78244 Gottmadingen (DE)
(72) Erfinder: Willburger, Richard, 78262 Gailingen (DE); Käppeler, Josef, 78333 Stockach (DE); Dubbelboer, Beene, 3040 Huldenberg (BE)
(74) Vertreter: Grünecker, Kinkeldey, Stockmair & Schwanhäusser Anwaltssozietät

(56) Entgegenhaltungen:
- EP-A- 0 037 155
- EP-A- 0 264 493
- DE-U- 8 425 905

## Beschreibung

Die Erfindung betrifft eine Rundballenpresse der im Oberbegriff des Anspruchs 1 angegebenen Art.

Es handelt sich hierbei um eine Festkammer-Rundballenpresse, im Unterschied zu einer Rundballenpresse mit variabler Preßkammer.

Aus DE-A-33 35 900 ist eine Festkammer-Rundballenpresse bekannt, bei der die Querschnittsform der Preßkammer zwischen in etwa kreisrund und in etwa quadratisch umstellbar ist, um bei Bedarf viereckige, am Hang nicht wegrollende Ballen zu formen. Bei der Umstellung der runden Preßkammer auf die quadratische Form nach dem Fertigstellen eines zunächst runden Rundballens wird deren Volumen etwas verkleinert.

An sich ist es beim Arbeiten mit einer Rundballenpresse mit Festkammer zweckmäßig, eine möglichst große Querschnittsgröße der Preßkammer zu haben, weil dies die spezifischen Wickelkosten gering hält. Jedoch wäre es auch wünschenswert, die Querschnittsgröße bzw. das Volumen der Preßkammer variieren zu können, beispielsweise im Hinblick auf das zu verarbeitende Emtegut. Der Landwirt könnte dann nicht nur jeweils bedarfsgerecht portionieren, sondem bei Erntegut mit höherem spezifischen Gewicht für Silage kleinere Rundballen herstellen, hingegen bei Emtegut mit geringerem spezifischen Gewicht, wie Heu oder Stroh größere und leicht handhabbare Rundballen herstellen.

Weiterer Stand der Technik ist enthalten in EP-A-0 264 493, EP-A-0 037 155 und DE-U-84 25 905.

Der Erfindung liegt die Aufgabe zugrunde, eine an sich als Festkammer-Rundballenpresse konzipierte Rundballenpresse zu schaffen, die auf baulich einfache Weise eine bedarfsangepaßte Änderung des Volumens der herzustellenden Rundballen gestattet.

Die gestellte Aufgabe wird mit den Merkmalen des Anspruchs 1 gelöst.

Es wird die Querschnittsgröße der Preßkammer ausgehend von einer Querschnittsgrundgröße durch Einbringen des zusätzlichen Wandabschnittes in den zwischen dem Gehäuse und der Auswurfklappe gebildeten Spalt in wenigstens einer Stufung vergrößert. Dabei wird der Erkenntnis Rechnung getragen, daß zweckmäßig durch die Verstellbewegung der Auswurfklappe, die an sich zum Auswerfen eines fertigen Rundballens benötigt wird, ein Spalt in der Umfangswand der Preßkammer bildbar ist, der sich bei Ausfüllen durch den zusätzlichen Wandabschnitt nutzen läßt, um die Querschnittsgröße der Preßkammer und damit das Volumen des Rundballens zu vergrößern. Der Benutzer der Rundballenpresse ist dadurch in der Lage, bedarfsgerecht größere oder kleinere Rundballen herzustellen, abhängig davon, ob er den zusätzlichen Wandabschnitt in den Spalt einbringt, oder nicht. Besonders vorteilhaft ist dabei, daß der zusätzliche Wandabschnitt eine Anbaugruppe sein kann, die sich ohne nennenswerte Modifikationen des herkömmlichen Festkammer-Rundballenpressen-Konstruktionsprinzips, auch im Zuge einer nachträglichen Umrüstung, anbringen läßt. Es ist alternativ oder additiv vorgesehen, den zusätzlichen Wandabschnitt in einen im Bereich der Klappenachse bildbaren Spalt einzubringen.

Gemäß Anspruch 2 ist eine sehr große Variationsbreite gegeben, wenn die Preßkammer-Querschnittsgröße in mehreren Stufungen veränderbar ist. Dies kann erfolgen durch Einbringen eines oder mehrerer zusätzlicher Wandabschnitte in den Spalt oder durch Verwenden eines Wandabschnittes, der in seiner Wirkgröße in sich veränderbar ist.

Baulich einfach wird gemäß Anspruch 3 der zusätzliche Wandabschnitt von einer Passiv- oder Bereithaltestellung außerhalb der Preßkammer in die Betriebsstellung in den Spalt verstellt. in der Betriebsstellung definiert er zusammen mit den anderen Wandabschnitten die Querschnittsgröße der Preßkammer, derart, als ob der zusätzliche Wandabschnitt von vorneherein vorgesehen bzw. die Rundballenpresse mit einer derart großen Preßkammer-Querschnittsgröße ausgebildet wäre. Es ist denkbar, den jeweils benötigten zusätzlichen Preßkammer-Wandabschnitt als von der Rundballenpresse getrennte Baueinheit bereitzuhalten und bei Bedarf einzusetzen und nicht mit der Rundballenpresse mitzuführen, weil derartige Umstellungen im Regelfall ohnedies nicht auf dem Feld durchgeführt werden.

Um die Umstellung jederzeit durchführen zu können, ist es zweckmäßig, den zusätzlichen Wandabschnitt am Gehäuse oder an der Auswurfklappe beweglich abzustützen bzw. zu halten. Da in der Betriebsstellung der zusätzliche Wandabschnitt teilzunehmen hat an der Ballenformung, ist es zweckmäßig, ihn als antreibbares Preßelement wie die benachbarten Preßelemente auszubilden.

Gemäß Anspruch 5 wird der zusätzliche Wandabschnitt an der der Gehäuseachse diametral gegenüberliegenden Seite in den Spalt eingebracht, gemäß Anspruch 6 hingegen alternativ oder additiv in einen bei der Achse der Klappe bildbaren Spalt. Dann könnte ein verstellbarer Achsmechanismus vorgesehen werden.

Wenn gemäß Anspruch 7 die Preßelemente der Rundballenpresse ohnedies Preßwalzen sind, empfiehlt es sich, gemäß Anspruch 8 beim zusätzlichen Wandabschnitt einen Walzengang mit wenigstens einer Preßwalze vorzusehen, die sich einfach wie die ohnedies vorgesehenen Preßwalzen antreiben läßt. Mit einer Preßwalze in der gleichen Größe wie die anderen Preßwalzen läßt sich eine Vergrößerung um eine Stufung vornehmen, die der Preßwalzenteilung entspricht. Mit zwei solchen Preßwalzen läßt sich ein doppelt so großer Stufungssprung einstellen. Ist hingegen eine deutlich größere Preßwalze in dem zusätzlichen Wandabschnitt vorgesehen, wird der Stufungssprung bei der einen möglichen Stufung relativ groß.

Baulich einfach wird gemäß Anspruch 9 der Walzengang mit einem Rahmen ausgebildet, der sich um die Achse einer an den Spalt angrenzenden Preßwalze verschwenken läßt. Dies ermöglicht eine günstige Antriebsübertragung auf die Preßwalze bzw. die Preßwalzen des Walzenganges in dessen Betriebsstellung.

Zweckmäßig ist gemäß Anspruch 10 ein Bereich des klappenfesten Preßkammer-Wandabschnitts schwenkverstellbar, um bei Änderungen der Querschnittsgröße eine zusätzliche Anpaßmöglichkeit in Richtung zu einer idealen Kreisform zu erhalten. Jenachdem, ob der zusätzliche Wandabschnitt in den Spalt eingebracht ist oder nicht, wird der Bereich nach innen oder nach außen verschwenkt, so daß im Grundzug eine gerundete Polygonform erhalten wird.

Zweckmäßigerweise umfaßt dieser Bereich mehrere Preßwalzen in der Auswurfklappe. Die Position der Achse, um welche der Bereich hin- und herschwenkbar ist, kann innerhalb der Höhe der Auswurfklappe unterschiedlich gewählt werden. Zweckmäßigerweise liegt die Achse zwischen benachbarten Achsen zweier Preßwalzen, entsprechen den Angaben in Anspruch 11.

Baulich einfach werden gemäß Anspruch 12 die Preßwalzen in beiderseitigen Schwingen gelagert, die sich in den Seitenwänden verschwenken lassen. Die Schwenkhub-Begrenzungsöffnungen in den Seitenwänden, die von wenigstens einer Achse einer Preßwalze durchsetzt werden, stellen eine Schwenkbegrenzung dar.

Alternativ ist gemäß Anspruch 13 der zusätzliche Wandabschnitt von einem Kettenelevator oder einem Riementrieb gebildet, was auch bei einem größeren Stufungssprung Bauraum spart und eine gute Anpassung an die Kontur des Rundballens ermöglicht.

Da in der Betriebsstellung des zusätzlichen Wandabschnittes die Preßkammer seitlich geschlossen bleiben muß, ist es zweckmäßig, gemäß Anspruch 14 seitliche Spaltabdeckungen vorzusehen.

Gemäß Anspruch 15 können die Spaltabdeckungen einander überlappende Federstahlplatten sein, die bei der Preßkammer-Querschnittsgrundgröße im wesentlichen funktionslos sind, aber bei jeder größeren Querschnittsgröße einen seitlichen Emtegut-Austritt verhindern, wenn die Auswurfklappe bei der Formung des Rundballens in der Spaltstellung steht.

Gemäß Anspruch 16 können die Platten, z.B. um 90°, nach außen geklappt werden, wenn eine kleine Preßkammergröße eingestellt wird.

Gemäß Anspruch 17 wird die jeweilige Spaltgröße bzw. Spaltstellung der Auswurfklappe durch Anschläge gehalten, so daß der übliche Auswurfklappen-Schließmechanismus benutzt werden kann, um die Auswurfklappe auch in der Spaltstellung festzuhalten. Die ideale Preßkammerform ist ein Kreis. Durch Einbringen des zusätzlichen Wandabschnittes wird die Kreisform nur geringfügig verzerrt.

Bei mehr als einer möglichen Stufung der Querschnittsgröße ist es zweckmäßig, zu starke Abweichungen von der Kreisform zu vermeiden, weil dies bei der Ballenformung zu ungleichmäßigen Verhältnissen führen könnte. Es werden deshalb gemäß Anspruch 18 bei der mittleren Stufung eine annähernde Kreisform hergestellt und bei den niedrigsten und höchsten Stufungen Ellipsen- oder gerundete Polygonformen, die möglichst wenig und vor allem jeweils in etwa gleich von der Kreisform abweichen, so daß bei jeder eingestellten Querschnittsgröße in etwa die gleichen Arbeitsverhältnisse vorliegen. Besonders zweckmäßig wird in der mittleren Stufung bereits geringfügig von der Kreisform im Hinblick auf die Ellipsen- oder Polygonform bei den beiden anderen Abstufungen abgewichen, so daß in allen drei Abstufungen nur geringfügige Abweichungen von der idealen Kreisform vorliegen. Diese Abweichungen können zu einem für die Qualität der Rundballen günstigen Walken beim Wickeln führen, beispielsweise zur Erhöhung und/oder Vergleichmäßigung der Verdichtung des fertigen Rundballens.

Bei einer zweckmäßigen Ausführung einer solchen Rundballenpresse läßt sich die Querschnittsgröße in drei Abstufungen verändern, wobei die Querschnittsfläche der Preßkammer ausgehend von der Grundquerschnittsgröße = 100 % bei der ersten Abstufung auf ca. 112 % und bei der zweiten Abstufung auf ca. 124 % vergrößert wird, bei einem Preßkammerdurchmesser bei der Querschnittsgrundgröße von ca. 1,22 m. In beiden Fällen reichen zwei Abstufungen aus.

Anhand der Zeichnung werden Ausführungsformen des Erfindungsgegenstandes erläutert. Es zeigen:
- Fig. 1: eine Rundballenpresse in schematischer Darstellung und einer eingestellten Preßkammer-Querschnittsgrundgröße,
- Fig. 2: die Preßkammer von Fig. 1 in schematischer Darstellung mit vergrößerter Preßkammer-Querschnittsgröße,
- Fig. 3: die Preßkammer in einer zweiten Abstufung mit weiter vergrößerter Preßkammer-Querschnittsgröße,
- Fig. 4: eine weitere Ausführungsform im Ausschnitt, bei einer kleinen Abstufung der Preßkammer, und
- Fig. 5: die Ausführungsform von Fig. 4, bei größerer Abstufung.

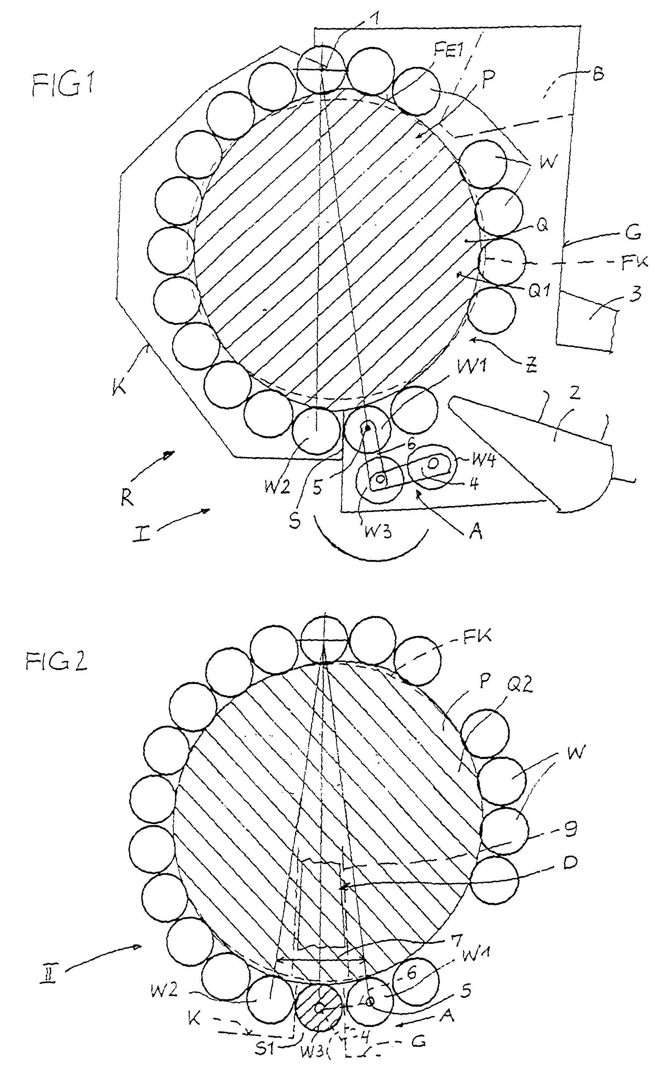

Eine Rundballenpresse R in Fig. 1 weist ein Gehäuse G auf, an dem eine Auswurfklappe K um eine Gehäuseachse 1 schwenkbar gelagert ist. Die Auswurfklappe K wird durch nicht-gezeigte Mechanismen in der Schließstellung gehalten und zum Auswerfen eines fertiggewickelten, eingebundenen Rundballens in Fig. 1 im Uhrzeigersinn hochgeschwenkt. Das Gehäuse G begrenzt zusammen mit der Auswurfklappe K eine Preßkammer P mit in Fig. 1 in etwa kreisförmiger Konfiguration, in der der jeweilige Rundballen aus Emtegut gewickelt wird. Zum Begrenzen der Preßkammer sind Preßelemente W vorgesehen, die einen gehäusefesten und einen klappenfesten Preßkammer-Wandabschnitt definieren. Im Gehäuse G ist eine Bindevorrichtung B angedeutet, die durch einen Zwischenspalt zwischen auseinandergerückten Preßwalzen W auf übliche Weise Bindematerial in die Preßkammer führt. In einem durch Z angedeuteten Bereich im Gehäuse G liegt eine Eintrittsöffnung in die Preßkammer P vor, durch welche das mittels einer Aufnahmevorrichtung 2 gesammelte Erntegut in die Preßkammer P überführt wird.

Beispielsweise liegen im Gehäuse G neun Preßwalzen P vor, die über einen gemeinsamen Antrieb angetrieben werden, und liegen in der Auswurfklappe K zehn Preßwalzen W vor, die ebenfalls angetrieben sind. Die Rundballenpresse R wird mittels einer Deichsel 3 geschleppt und läuft mit Rädern auf dem Boden. Zwischen der Auswurfklappe K und dem Gehäuse G ist ein Spalt S definiert, der in der Betriebsstellung I der Rundballenpresse R von Fig. 1 geschlossen ist, so daß die Preßwalzen W1, W2 aneinander angrenzen. Die Preßkammer hat eine Querschnittsgröße Q, die in der in Fig. 1 gezeigten Betriebsstellung I die Preßkammer-Querschnittsgrundgröße Q1 (100 % bei einem Innendurchmesser von beispielsweise 1,22 m ist.

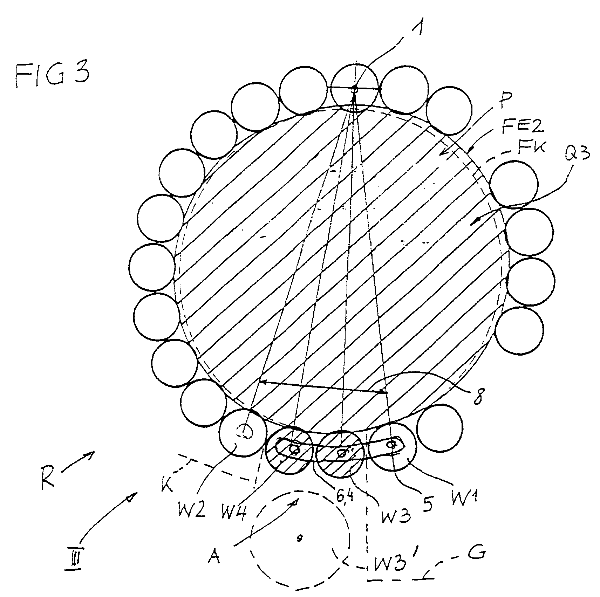

Am Gehäuse G ist wenigstens ein zusätzlicher Preßkammer-Wandabschnitt A in einer Passivstellung in Fig. 1 und in der Nähe des Spaltes S angebracht, beispielsweise ein Walzengang C; der mit einem Rahmen 4, 6 um die Achse 5 der Preßwalze W1 des Gehäuses schwenkbar gelagert sein kann. Der Walzengang C enthält beispielsweise zwei Preßwalzen W3, W4 in etwa der Größe der Preßwalzen W. Der Walzengang C könnte auch nur eine Preßwalze oder mehr als zwei Preßwalzen aufweisen. Sind - wie gezeigt - zwei Preßwalzen W3, W4 vorgesehen, dann ist der Walzengang C zweckmäßigerweise so ausgebildet, daß sich in den zwischen der Auswurfklappe K und dem Gehäuse G gegenüberliegend zur Gehäuseachse 1 jeweils bewußt gebildeten Spalt S1, S2 (Fig. 2 und 3) eine oder beide Preßwalzen W3, W4 (Betriebsstellungen II und III) einbringen lassen, um ausgehend von der Querschnittsgrundgröße Q1 größere Querschnittsgrößen Q2 und Q3 zu bilden. Der Walzengang-Rahmen 4, 6 könnte starr sein, so daß nur beide Walzen W3, W4 gemeinsam in den Spalt S2 einbringbar sind. Eine Einbringung des zusätzlichen Wandabschnitts in einen bei der Gehäuseachse bildbaren Spalt ist ebenfalls möglich.

In Fig. 2 ist angedeutet, daß die Auswurfklappe K unter Bildung eines untenliegenden Spaltes S1 vom Gehäuse G weggeschwenkt ist, wobei nur schematisch angedeutete Anschläge 7 für die Einhaltung der Spaltweite S1 sorgen. Vom zusätzlichen Wandabschnitt A ist die Preßwalze W3 in den Spalt S1 eingeschwenkt, so daß wiederum eine voll funktionsfähige Preßkammer P mit der Querschnittsgröße Q2 gebildet ist.

Im Bereich der seitlichen Begrenzung der Preßkammer P ist beim Spalt S, S1, S2 eine Spaltabdeckung D angedeutet, die beispielsweise aus sich überlappenden Federstahlplatten 9 zwischen dem Gehäuse G und der Auswurfklappe K gebildet wird und die selbsttägig dafür sorgt, daß in den Betriebsstellungen II und III der Fig. 2 und 3 die Preßkammer seitlich geschlossen bleibt.

In Fig. 2 ist die zweite Preßwalze W4 außerhalb des Spaltes S1. Die Querschnittsgröße hat sich auf ca. 112 % vergrößert, weil die Preßwalze W3 in etwa so groß ist wie die Preßwalzen W. Der mittlere Durchmesser der Preßkammer P beträgt beispielsweise 1,28 m.

In Fig. 3 sind beide Preßwalzen W3, W4 in den Spalt S2 eingebracht, der durch schematisch angedeutete Anschläge 8 gehalten wird. Die Querschnittsgröße (Querschnittsfläche) hat sich auf ca. 124 % vergrößert bei einem Innendurchmesser von beispielsweise 1,35 m.

In Fig. 3 ist angedeutet, daß anstelle der beiden Preßwalzen W3, W4 auch eine einzige, jedoch größere Preßwalze W3' vorgesehen sein könnte.

Anstelle eines Walzenganges C als Preßkammer-Wandabschnitt A mit einer, zwei oder mehreren Preßwalzen oder einer größeren Preßwalze als die Preßwalzen in der Preßkammer, könnte auch ein Kettenelevator oder ein Riementrieb für diese Aufgabe benutzt werden, der in der jeweiligen Betriebsstellung II bzw. III in den Spalt S1, S2 eingebracht wird, um die dann unterbrochene Umrißkontur der vergrößerten Preßkammer zu vervollständigen. Bei der gezeigten Ausführungsform wird die Querschnittsgröße ausgehend von einer Grundgröße in zwei Abstufungen mit in etwa gleichen Stufensprüngen vergrößert. Es würde jedoch ausreichen, nur eine Abstufung vorzusehen. Falls dies für zweckmäßig gehalten wird, könnten jedoch mehr als zwei Abstufungen vorgesehen sein, und könnten auch die Abstufungssprünge unterschiedlich gestaltet werden.

Da die annähernd ideale Preßkammerform kreisrund ist, würde sich bei den in den Fig. 1 bis 3 gezeigten zwei Abstufungen bei den größeren Querschnittsgrößen Q2, Q3 deutliche Abweichungen von der Kreisform bei der Grundgröße Q1 ergeben, die zu Einflüssen beim Wickeln des Rundballens führen könnten, z.B. zu einem stärken Walkeffekt und deshalb zu höherer Ballendichte oder zu anderer Ballendichtenverteilung. Um deshalb bei jeder Querschnittsgröße in etwa gleiche Arbeitsbedingungen zu schaffen, ist es zweckmäßig (Fig. 1 bis 3), die Formabweichungen zwischen den unterschiedlichen Querschnittsgrößen so gering wie möglich zu halten.

Aus den vorerwähnten Gründen wird bei der Kontur der von den Preßwalzen im Gehäuse G und in der Auswurfklappe K definierten Preßkammer-Wandabschnitte bereits geringfügig von der Kreisform abgewichen. In Fig. 1 läßt sich gestrichelt die ideale Kreisform FK erkennen. Davon weicht die Konfiguration der Preßwalzen W ab, wie in ausgezogenen Linien gezeigt ist, und zwar in Richtung zu einer Ellipsenform FE1 mit annähernd vertikal stehender größerer Ellipsenachse. Beim Einbringen der nur einen Preßwalze W3 in den Spalt S1 gemäß Fig. 2 wird dann eine Annäherung an die Kreisform FK erreicht, jedoch ist nach wie vor eine geringfügige Abweichung zu einer Ellipsenform vorhanden, wie dies der Unterschied zwischen den gestrichelten und ausgezogenen Linien andeutet. In der Betriebsstellung III von Fig. 3 ist wiederum eine Ellipsenform FE2 vorhanden, abweichend von der idealen Kreisform FK (gestrichelt angedeutet), wobei in Fig. 3 die längere Achse der Ellipse in etwa horizontal liegt. Mit dieser Abweichung von der Kreisform bereits bei der kleinsten Querschnittsgröße Q1 in Fig. 1 werden für alle möglichen Abstufungen in etwa die gleichen Arbeitsbedingungen beim Formen des Rundballens erzielt, d.h. in etwa ein gleichförmiges Walken für gleiche Ballendichte oder gleiche Ballendichteverteilung im fertigen Rundballen. Der zusätzliche Preßkammer-Wandabschnitt A könnte eine von der Rundballenpresse R getrennte Anbaueinheit sein, die bei Bedarf in den dann geöffneten Spalt S1 oder S2 eingebaut wird, ansonsten aber nicht Teil der Rundballenpresse ist.

Unabhängig davon, ob der zusätzliche Wandabschnitt A Teil der Rundballenpresse ist, oder eine getrennte Anbaueinheit, sind nennenswerte Modifikationen am Konzept der Festkammer-Rundballenpresse nicht erforderlich. Die schwenkbare Lagerung des Walzenganges C an der Achse 5 der Preßwalze W1 hat den Vorteil, eine baulich einfache Antriebsverbindung zu der oder den Preßwalzen W3, W4 eingliedern zu können. Es ist allerdings auch möglich, die Preßwalze oder das Preßelement, das Teil des zusätzlichen Wandabschnittes ist, gar nicht anzutreiben, sondem frei laufen zu lassen. Für einen im Bereich der Gehäuseachse 1 einbringbaren Wandabschnitt empfiehlt sich eine verstellbare Lagerung der Gehäuseachse 1.

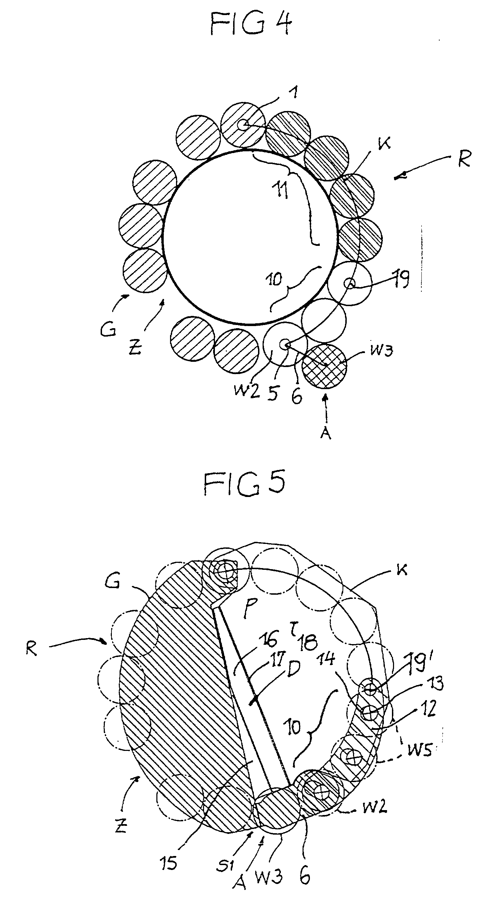

In den Fig. 4 und 5 ist im Unterschied zu den vorhergehenden Ausführungsformen eine Rundballenpresse R schematisch angedeutet, bei der der zusätzliche Wandabschnitt A an der Auswurfklappe K angebracht ist und beispielsweise eine Preßwalze W3 umfaßt, die mit dem Rahmen 6 um die Drehachse 5 der untersten Preßwalze W2 der Auswurfklappe K verschwenkbar ist. Zusätzlich ist in Fig. 4 ein Bereich 10 des klappenfesten Wandbereichs, der insgesamt aus den Bereichen 10 und 11 besteht, um eine parallel zur Preßkammerachse liegende Achse 19 verschwenkbar. Die Achse 19 fällt in Fig. 4 zusammen mit der Achse einer Preßwalze, während in Fig. 5 die Achse 19' zwischen den Achsen zweier benachbarter Preßwalzen positioniert ist. Die Achse 19 bzw. 19' ist in Seitenwänden 18 der Auswurfklappe K abgestützt und trägt seitliche Schwingen 12 für mehrere Preßwalzen. Die Position der Achse 19, 19' innerhalb der Auswurfklappe kann frei gewählt werden. Zweckmäßigerweise sind im Bereich 10 bis zur Hälfte sämtlicher Preßwalzen enthalten.

In Fig. 5 ist der zusätzliche Wandabschnitt A bzw. die Preßwalze W3 in den Spalt S1 eingeschwenkt. Die Schwingen 12 sind um die Achse 19' nach außen geschwenkt. Es ergibt sich eine gerundete Polygonform für die Preßkammer P. Die Achsen der Preßwalzen im Bereich 10, beispielsweise der Preßwalzen W5, greifen in Hubbegrenzungsöffnungen 14 in den Seitenwänden ein, die nach Art von Bogenschlitzen gestaltet sein können.

Um bei vergrößertem Spalt S, der durch das Einfügen des zusätzlichen Wandabschnittes A in Fig. 5 entstanden ist, das Austreten des Emteguts zur Seite zu verhindern, sind beiderseitige Abdeckungen D vorgesehen, die beispielsweise aus zwei Federstahlplatten 16, 15 bestehen, deren jede am Gehäuse G bzw. an der Auswurfklappe K oder den Seitenwänden 18 schwenkbar ist, beispielsweise um Schamierachsen 17. Jede Platte 15, 16 kann aus der gezeigten Abdeckstellung um 90° oder mehr nach außen geschwenkt werden, wenn der zusätzliche Wandabschnitt A entnommen wird.

## Patentansprüche

1. Rundballenpresse, mit einem Gehäuse (G), an dem eine Auswurfklappe (K) beweglich angeordnet ist, mit einer von antreibbaren Preßelementen (W) im Gehäuse (G) und in der Auswurfklappe (K) begrenzten Preßkammer (P), deren Querschnittsgröße (Q, Q1, Q2, Q3') mindestens von gehäusefesten und klappenfesten Preßkammer-Wandabschnitten begrenzt wird, **dadurch gekennzeichnet, daß** die Querschnittsgröße der Preßkammer (P) mittels wenigstens eines zusätzlichen Preßkammer-Wandabschnittes (A) veränderbar ist, der in einen Spalt (S1, S2) zwischen dem Gehäuse (G) und der Auswurfklappe (K) einbringbar ist.

2. Rundballenpresse nach Anspruch 1, **dadurch gekennzeichnet, daß** die Preßkammer-Querschnittsgröße (Q) ausgehend von einer Grundgröße (Q1) in mehr als einer Stufung veränderbar ist.

3. Rundballenpresse nach Anspruch 1, **dadurch gekennzeichnet, daß** der zusätzliche Preßkammer-Wandabschnitt (A) aus einer Passivstellung (I) außerhalb der Preßkammer (P) in wenigstens eine Betriebsstellung (II, III) in den Spalt (S1, S2) bringbar ist, in der er gemeinsam mit den anderen Preßkammer-Wandabschnitten eine gegenüber der Querschnitts-Grundgröße (Q1) vergrößerte Querschnittsgröße (Q2, Q3) der Preßkammer (P) definiert.

4. Rundballenpresse nach Anspruch 1, **dadurch gekennzeichnet, daß** der zusätzliche Preßkammer-Wandabschnitt (A) am Gehäuse (G) oder an der Auswurfklappe (K) beweglich abgestützt ist, und wenigstens ein Preßelement (W3, W4) aufweist, vorzugsweise ein antreibbares Preßelement (W3, W4).

5. Rundballenpresse nach Anspruch 1, **dadurch gekennzeichnet, daß** die Auswurfklappe (K) am Gehäuse (G) um eine zur Preßkammerachse parallele Gehäuseachse (1) schwenkverstellbar ist, und daß der zusätzliche Preßkammer-Wandabschnitt (A) in den der Gehäuseachse (1) diametral gegenüberliegenden und durch Schwenken der Auswurfklappe (K) bildbaren Spalt (S1, S2) einbringbar ist.

6. Rundballenpresse nach Anspruch 1, **dadurch gekennzeichnet, daß** die Auswurfklappe (K) am Gehäuse (G) um eine zur Preßkammerachse parallele Achse (1) schwenkverstellbar ist, und daß der zusätzliche Preßkammer-Wandabschnitt in einen bei der Achse (1) bildbaren Spalt einbringbar ist.

7. Rundballenpresse nach Anspruch 1, **dadurch gekennzeichnet, daß** die Preßelemente (W, W1, W2) Preßwalzen in etwa gleicher Größen sind.

8. Rundballenpresse nach Anspruch 1, **dadurch gekennzeichnet, daß** der zusätzliche Preßkammer-Wandabschnitt (A) ein Walzengang (C) mit wenigstens einer Preßwalze (W3, W4) ist, vorzugsweise mit zwei Preßwalzen (W3, W4) jeweils in etwa der Größe der Preßwalzen (W) im Gehäuse (G) und/oder in der Auswurfklappe (K), oder mit einer Preßwalze (W3') mit einer größeren Größe als die Preßwalzen (W) im Gehäuse (G) und/oder in der Auswurfklappe (K).

9. Rundballenpresse nach Anspruch 8, **dadurch gekennzeichnet, daß** der Walzengang (C) mit einem Rahmen (5, 6) versehen ist, der um die Achse (5) der an den Spalt (S, S1, S2) angrenzenden Preßwalze (W1) des Gehäuses (G) schwenkbar ist.

10. Rundballenpresse nach Anspruch 1, **dadurch gekennzeichnet, daß** von dem klappenfesten Preßkammer-Wandabschnitt ein den zusätzlichen Preßkammer-Wandabschnitt (A) lagernder Bereich (10) um eine zur Preßkammer-Achse parallele Achse (19, 19') schwenkverstellbar ist.

11. Rundballenpresse nach Anspruch 10, **dadurch gekennzeichnet, daß** der Bereich (10) in etwa die Hälfte der im klappenfesten Preßkammer-Wandabschnitt vorgesehenen Preßelemente, vorzugsweise Preßwalzen, umfaßt, vorzugsweise die benachbarten Preßwalzen (W2, W5).

12. Rundballenpresse nach Anspruch 10, **dadurch gekennzeichnet, daß** die Preßwalzen des Bereiches (10) in beiderseitigen Schwingen (12) gelagert sind, die in Seitenwänden (18) der Auswurfklappe (K) an der Achse (19, 19') gelagert sind und mit wenigstens einer Preßwalzen-Achse (13) in Schwenkhub-Begrenzungsöffnungen (14) der Seitenwände eingreifen.

13. Rundballenpresse nach Anspruch 1, **dadurch gekennzeichnet, daß** der zusätzliche Preßkammer-Wandabschnitt (A) ein Kettenelevator oder ein Riemen- oder Bandantrieb ist.

14. Rundballenpresse nach Anspruch 1, **dadurch gekennzeichnet, daß** am Gehäuse (G) und/oder der Auswurfklappe (K) seitliche Spaltabdeckungen (D) vorgesehen sind.

15. Rundballenpresse nach Anspruch 14, **dadurch gekennzeichnet, daß** die Spaltabdeckungen (D) einander überlappende, permanent am Gehäuse (G) und/oder der Auswurfklappe (K) angebrachte Federstahlplatten (9) sind.

16. Rundballenpresse nach Anspruch 14, **dadurch gekennzeichnet, daß** jede Spaltabrechnung (D) aus am Gehäuse (G) und an der Auswurfklappe (K) zwischen einer Abdeckstellung und einer Ruhestellung klappbar gelagerten Federstahlplatten (16, 17) besteht.

17. Rundballenpresse nach Anspruch 1, **dadurch gekennzeichnet, daß** die jeweilige Spaltgröße (S1, S2) durch Anschläge (7, 8) zwischen der Auswurfklappe (K) und dem Gehäuse (G) einstellbar ist.

18. Rundballenpresse nach wenigstens einem der vorhergehenden Ansprüche, **dadurch gekennzeichnet, daß** bei zwei von der Preßkammer-Querschnittsgrundgröße (Q1) ausgehenden Stufungen der Preßkammer-Querschnittsgröße (Q) mit annähernd gleichen Stufungssprüngen bei der mittleren Stufung eine annähemde Kreisform (FK) der Preßkammer (P), in der untersten Stufung bzw. bei der Preßkammer-Querschnittsgrundgröße (Q1) annähernd eine Ellipsen- oder gerundete Polygonform (FE1) der Preßkammer (P), und in der höchsten Stufung ebenfalls eine Ellipsen- oder gerundete Polygonform (FE2) der Preßkammer (P) vorgesehen sind, wobei die Formabweichungen beider Ellipsen- oder Polygonformen (FE1, FE2) von der annähernden Kreisform (FK) in etwa gleich sind.

## Claims

1. Roll baler, having a housing (G) on which an ejector flap (K) is displaceably disposed, and a pressing chamber (P) which is defined by drivable pressing members (W) in the housing (G) and in the ejector flap (K), the cross-sectional dimension (Q, Q1, Q2, Q3') of which chamber is defined at least by pressing chamber wall portions which are secured to the housing and secured to the flap, **characterised in that** the cross-sectional dimension of the pressing chamber (P) is variable by means of at least one additional pressing chamber wall portion (A), which is insertable into a gap (S1, S2) between the housing (G) and the ejector flap (K).

2. Roll baler according to claim 1, **characterised in that** the pressing chamber cross-sectional dimension (Q) is variable from a basic dimension (Q1) in more than one graduation.

3. Roll baler according to claim 1, **characterised in that** the additional pressing chamber wall portion (A) can be brought into the gap (S1, S2) from a passive position (I) externally of the pressing chamber (P) into at least one operative position (II,III), in which said portion defines, together with the other pressing chamber wall portions, a cross-sectional dimension (Q2, Q3) of the pressing chamber (P) which dimension is greater than the basic cross-sectional dimension (Q1).

4. Roll baler according to claim 1, **characterised in that** the additional pressing chamber wall portion (A) is displaceably supported on the housing (G) or on the ejector flap (K) and includes at least one pressing member (W3, W4), preferably a drivable pressing member (W3, W4).

5. Roll baler according to claim 1, **characterised in that** the ejector flap (K) is pivotally displaceable on the housing (G) about a housing axis (1) parallel to the pressing chamber axis, and **in that** the additional pressing chamber wall portion (A) is insertable into the gap (S1, S2) which is diametrically opposed to the housing axis (1) and can be formed by pivoting the ejector flap (K).

6. Roll baler according to claim 1, **characterised in that** the ejector flap (K) is pivotally displaceable on the housing (G) about an axis (1) parallel to the pressing chamber axis, and **in that** the additional pressing chamber wall portion is insertable into a gap which can be formed at the axis (1).

7. Roll baler according to claim 1, **characterised in that** the pressing members (W, W1, W2) are pressing rollers of substantially identical dimensions.

8. Roll baler according to claim 1, **characterised in that** the additional pressing chamber wall portion (A) is a roller table (C) having at least one pressing roller (W3, W4), preferably having two pressing rollers (W3, W4) each having substantially the dimension of the pressing rollers (W) in the housing (G) and/or in the ejector flap (K), or having a pressing roller (W3') having a greater dimension than the pressing rollers (W) in the housing (G) and/or in the ejector flap (K).

9. Roll baler according to claim 8, **characterised in that** the roller table (C) is provided with a frame (5, 6), which is pivotable about the axis (5) of the pressing roller (W1) of the housing (G), which roller abuts against the gap (S, S1, S2)

10. Roll baler according to claim 1, **characterised in that** one region (10) of the pressing chamber wall portion, which is secured to the flap, supports the additional pressing chamber wall portion (A) and is pivotally displaceable about an axis (19, 19') parallel to the pressing chamber axis.

11. Roll baler according to claim 10, **characterised in that** the region (10) includes substantially half the pressing members, preferably pressing rollers, preferably the adjacent pressing rollers (W2, W5), which are provided in the pressing chamber wall portion secured to the flap.

12. Roll baler according to claims 10, **characterised in that** the pressing rollers of the region (10) are mounted in rotating arms (12) on both sides, which arms are mounted in lateral walls (18) of the ejector flap (K) on the axis (19, 19') and engage, with at least one pressing roller spindle (13), in pivotal movement-limiting apertures (14) of the lateral walls.

13. Roll baler according to claim 1, **characterised in that** the additional pressing chamber wall portion (A) is a bucket elevator or a belt drive or a tape drive.

14. Roll baler according to claim 1, **characterised in that** lateral gap coverings (D) are provided on the housing (G) and/or on the ejector flap (K).

15. Roll baler according to claim 14, **characterised in that** the gap coverings (D) are spring steel plates (9), which overlap one another and are attached permanently to the housing (G) and/or to the ejector flap (K).

16. Roll baler according to claim 14, **characterised in that** each gap covering (D) comprises spring steel plates (16, 17) which are pivotably mounted on the housing (G) and on the ejector flap (K) between a covering position and an inoperative position.

17. Roll baler according to claim 1, **characterised in that** the respective gap dimension (S1, S2) can be set by stop members (7, 8) between the ejector flap (K) and the housing (G).

18. Roll baler according to at least one of the preceding claims, **characterised in that**, when there are two graduations of the pressing chamber cross-sectional dimension (Q) originating from the basic pressing chamber cross-sectional dimension (Q1) and having approximately identical graduation jumps, an approximate circular configuration (FK) of the pressing chamber (P) is provided at the mean graduation, an elliptical or rounded polygonal configuration (FE1) of the pressing chamber (P) is provided approximately in the lowermost graduation or respectively at the basic pressing chamber cross-sectional dimension (Q1), and an elliptical or rounded polygonal configuration (FE2) of the pressing chamber (P) is provided also in the highest graduation, the differences between the two elliptical or polygonal configurations (FE1, FE2) from the approximate circular configuration (FK) being substantially identical.

## Revendications

1. Presse à balles rondes, avec un boîtier (G) sur lequel est disposé d'une manière mobile un volet d'éjection (K), avec une chambre de compression (P) délimitée par des éléments de compression (W) aptes à être entraînés dans le boîtier (G) et dans le volet d'éjection (K), dont la grandeur en section transversale (Q, Q1, Q2, Q3') est limitée au moins par des tronçons de paroi de chambre de compression solidaires du boîtier et solidaires du volet, **caractérisée en ce que** la grandeur en section transversale de la chambre de compression (P) est modifiable au moyen d'au moins un tronçon de paroi de chambre de compression additionnel (A) qui est insérable dans une fente (S1, S2) entre le boîtier (G) et le volet d'éjection (K).

2. Presse à balles rondes selon la revendication 1, **caractérisée en ce que** la grandeur en section transversale de la chambre de compression (Q), en partant d'une grandeur de base (Q1), est modifiable selon plus d'une graduation.

3. Presse à balles rondes selon la revendication 1, **caractérisée en ce que** le tronçon de paroi de chambre de compression additionnelle (A) peut être amené d'une position passive (I) à l'extérieur de la chambre de compression (P) dans au moins une position de fonctionnement (II, III) dans la fente (S1, S2) dans laquelle il définit conjointement avec les autres tronçons de paroi de chambre de compression une grandeur de base en section transversale (Q2, Q3) de la chambre de compression (P) agrandie par rapport à la grandeur de base en section transversale (Q1).

4. Presse à balles rondes selon la revendication 1, **caractérisée en ce que** le tronçon de paroi de chambre de compression additionnel (A) est supporté d'une manière mobile au boîtier (G) ou au volet d'éjection (K) et présente au moins un élément de compression (W3, W4), de préférence un élément de compression (W3, W4) apte à être entraîné.

5. Presse à balles rondes selon la revendication 1, **caractérisée en ce que** le volet d'éjection (K) au boîtier (G) peut être ajusté d'une manière pivotante autour d'un axe de boîtier (1) parallèle à l'axe de la chambre de compression, et **en ce que** le tronçon de paroi de chambre de compression additionnel (A) est insérable dans la fente (S1, S2) diamétralement opposée à l'axe de boîtier (1) et pouvant être formée par un pivotement du volet d'éjection (K).

6. Presse à balles rondes selon la revendication 1, **caractérisée en ce que** le volet d'éjection (K) au boîtier (G) est ajustable d'une manière pivotante autour d'un axe (1) parallèle à l'axe de la chambre de compression, et **en ce que** le tronçon de paroi de chambre de compression additionnel est insérable dans une fente pouvant être formée auprès de l'axe (1).

7. Presse à balles rondes selon la revendication 1, **caractérisée en ce que** les éléments de compression (W, W1, W2) sont des rouleaux de compression à peu près de même grandeur.

8. Presse à balles rondes selon la revendication 1, **caractérisée en ce que** le tronçon de paroi de chambre de compression additionnel (A) est un roulement de rouleau (C) avec au moins un rouleau de compression (W3, W4), de préférence avec deux rouleaux de compression (W3, W4) respectivement à peu près de la grandeur des rouleaux de compression (W) dans le boîtier (G) et/ou dans le volet d'éjection (K), ou avec un rouleau de compression (W3') d'une autre grandeur que les rouleaux de compression (W) dans le boîtier (G) et/ou dans le volet d'éjection (K).

9. Presse à balles rondes selon la revendication 8, **caractérisée en ce que** le roulement de rouleau (C) est pourvu d'un cadre (5, 6) apte à pivoter autour de l'axe (5) du rouleau de compression (W1) du boîtier (G) avoisinant la fente (S, S1, S2).

10. Presse à balles rondes selon la revendication 1, **caractérisée en ce que** du tronçon de paroi de chambre de compression solidaire du volet, une zone (10) logeant le tronçon de paroi de chambre de compression additionnel (A) peut être ajusté par pivotement autour d'un axe (19, 19') parallèle à l'axe de la chambre de compression.

11. Presse à balles rondes selon la revendication 10, **caractérisée en ce que** la zone (10) comprend à peu près la moitié des éléments de compression, de préférence des rouleaux de compression prévus dans le tronçon de paroi de chambre de compression solidaire du volet, de préférence les rouleaux de compression avoisinants (W2, W5).

12. Presse à balles rondes selon la revendication 10, **caractérisée en ce que** les rouleaux de compression de la zone (10) sont logés dans des bielles oscillantes (12) des deux côtés qui sont logées dans des parois latérales (18) du volet d'éjection (K) à l'axe (19, 19') et qui s'engagent avec au moins un axe de rouleau de compression (13) dans des ouvertures de limitation de course de pivotement (14) des parois latérales.

13. Presse à balles rondes selon la revendication 1, **caractérisée en ce que** le tronçon de paroi de chambre de compression additionnel (A) est un élévateur à chaîne ou un entraînement à courroie ou à bande.

14. Presse à balles rondes selon la revendication 1, **caractérisée en ce que** des recouvrements de fente latéraux (D) sont prévus au boîtier (G) et/ou au volet d'éjection (K).

15. Presse à balles rondes selon la revendication 14, **caractérisée en ce que** les recouvrements de fente (D) sont des plaques en acier à ressort (9) qui se chevauchent, fixées d'une manière permanente au boîtier (G) et/ou au volet d'éjection (K).

16. Presse à balles rondes selon la revendication 14, **caractérisée en ce que** chaque recouvrement de fente (D) est constitué de plaques en acier à ressort (16, 17) logées au boîtier (G) et au volet d'éjection (K) d'une manière basculante entre une position de recouvrement et une position de repos.

17. Presse à balles rondes selon la revendication 1, **caractérisée en ce que** la grandeur de fente respective (S1, S2) est réglable par des butées (7, 8) entre le volet d'éjection (K) et le boîtier (G).

18. Presse à balles rondes selon au moins l'une des revendications précédentes, **caractérisée en ce que** dans le cas de deux graduations de la grandeur en section transversale de la chambre de compression (Q) partant de la grandeur de base en section transversale de la chambre de compression (Q1), avec des sauts de graduation approximativement égaux, il est prévu dans le cas de la graduation moyenne une forme circulaire approchante (FK) de la chambre de compression (P), dans la graduation la plus basse respectivement dans la grandeur de base en section transversale de la chambre de compression (Q1) approximativement une forme d'ellipse ou de polygone arrondi (FE1) de la chambre de compression (P), et dans la graduation la plus élevée également une forme d'ellipse ou de polygone arrondi (FE2) de la chambre de compression (P), où les écarts de forme des deux formes d'ellipse ou de polygone (FE1, FE2) de la forme approximativement circulaire (FK) sont à peu près égaux.
